(19) Europäisches Patentamt
European Patent Office
Office européen des brevets

(11) **EP 2 617 755 A1**

(12) **EUROPEAN PATENT APPLICATION**
published in accordance with Art. 153(4) EPC

(43) Date of publication:
**24.07.2013 Bulletin 2013/30**

(51) Int Cl.:
***C08G 69/26*** *(2006.01)*

(21) Application number: **11825301.2**

(22) Date of filing: **15.09.2011**

(86) International application number:
**PCT/JP2011/071745**

(87) International publication number:
**WO 2012/036303 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 JP 2011080065**
**17.09.2010 JP 2010209859**
**17.09.2010 JP 2010209887**

(71) Applicant: **UBE INDUSTRIES, LTD.**
**Ube-shi**
**Yamaguchi 755-8633 (JP)**

(72) Inventors:
• **MAEDA, Shuichi**
**Ube-shi, Yamaguchi 755-8633 (JP)**

• **KURACHI, Kouichiro**
**Ube-shi, Yamaguchi 755-8633 (JP)**
• **OKUSHITA, Hiroshi**
**Ube-shi, Yamaguchi 755-8633 (JP)**
• **HANAOKA, Yasunari**
**Ube-shi, Yamaguchi 755-8633 (JP)**
• **YABU, Naoyasu**
**Ube-shi, Yamaguchi 755-8633 (JP)**
• **NAKAGAWA, Tomoyuki**
**Ube-shi, Yamaguchi 755-8633 (JP)**

(74) Representative: **Dean, John Paul et al**
**Withers & Rogers LLP**
**4 More London Riverside**
**London SE1 2AU (GB)**

(54) **POLYOXAMIDE RESIN HAVING EXCELLENT IMPACT RESISTANCE AND IMPACT-RESISTANT PART**

(57) Provided is a polyoxamide resin which has excellent impact resistance and is characterized in that the polyoxamide resin is obtained from a diamine in which the diamine component has 10 to 18 carbons and in that the polyoxamide resin has a relative viscosity ($\eta$r) of 2.1 or greater as determined at 25°C using 96% sulfuric acid as a solvent and a solution having a concentration of 1.0 g/dL, and also provided is an impact-resistant part comprising this resin. The polyoxamide resin has a higher molecular weight than a conventional polyoxamide resin, a large moldable temperature range as estimated from the difference between the melting point and the thermal decomposition temperature and therefore excellent molten moldability, and furthermore excellent impact resistance when compared to a conventional aliphatic polyoxamide resin without losing the low water absorbency, chemical resistance, hydrolysis resistance, high elasticity, and high strength seen with aliphatic straight-chain polyoxamide resins.

EP 2 617 755 A1

**Description**

CROSS-REFERENCE TO RELATED APPLICATIONS

This application is based upon and claims the benefit of priority from Japanese Patent Applications No. 2010-209859, filed on September 17, 2010, No. 2010-209887, filed on September 17, 2010, and No. 2011-080065, filed on March 31, 2011, in the Japanese Patent Office, the contents of which are incorporated herein by reference.

TECHNICAL FIELD

The present invention relates to a polyoxamide resin and a part containing the resin.

BACKGROUND ART

A crystalline polyamide represented by nylon 6, nylon 66 and the like is widely used as a fiber for clothing material and industrial supplies or as general-purpose engineering plastic because of its excellent properties and ease of melt molding, but on the other hand, there are problems such as a change in physical properties due to water absorption or deterioration in acid, high-temperature alcohol or hot water. Demands for a polyamide more excellent in dimensional stability and chemical resistance are increasing. Also, along with the emergence of environmental problems such as global warming or resource depletion, a material friendly to the environment is attracting attention, and demands for a resin material utilizing a plant-derived raw material are increasing.

A polyamide resin using oxalic acid as the dicarboxylic acid component is referred to as a polyoxamide resin and is known to have a high melting point and a low water absorption percentage compared to other polyamide resins having the same amino group concentration (Patent Document 1: Japanese Unexamined Patent Publication (Kokai) No. 2006-57033), and utilization of a polyoxamide resin is expected in the field where use of a conventional polyamide having a problem of change in physical properties due to water absorption is difficult.

Heretofore, polyoxamide resins using various aliphatic linear diamines as the diamine component have been proposed. For example, a polyoxamide resin using 1,6-hexanediamine as the diamine component is taught in S.W. Shalaby, J. Polym. Sci., 11, 1 (1973) (Non-Patent Document 1).

As for a polyoxamide resin in which the diamine component is 1,9-nonanediamine (hereinafter, this resin is simply referred to as "PA92"), the production process using diethyl oxalate as the oxalic acid source and the crystal structure thereof are disclosed by L. Franco et al. (Non-Patent Document 2: L. Franco et al., Macromolecules, 31, 3912 (1998)). Also, in Patent Document 2 (Kohyo (National Publication of Translated Version) No. 5-506466), in the case of using dibutyl oxalate as the dicarboxylic acid ester, PA92 having an intrinsic viscosity of 0.99 dL/g and a molting point of 248°C is produced and PA102 having a reduced viscosity of 0.88 dL/g and a melting point of 253°C is produced (Kohyo No. 5-506466).

The present invention is a polyoxamide resin using, as the diamine component, two diamines of 1,9-nonanediamine and 2-methyl-1,8-octanediamine in a specific ratio, ensuring that a sufficient increase in the high molecular weight can be achieved, the moldable temperature range estimated from a difference between the melting point and the thermal decomposition temperature is broad, the melt moldability is excellent and furthermore, a polyamide resin excellent in the chemical resistance, hydrolysis resistance and the like compared with conventional aliphatic polyamide resins can be obtained without impairing low water absorption property seen in an aliphatic linear polyoxamide resin (Patent Document 3: WO2008-072754).

On the other hand, a polyoxamide resin using a diamine component having a carbon number of 10 to 18 is described in Patent Documents 4 to 6 (U.S. Patent Nos. 2,130,948 and 2,558,031 and Kohyo No. 5-506466).

RELATED ART

(Patent Document 1) Japanese Unexamined Patent Publication No. (Kokai) 2006-57033
(Patent Document 2) Japanese Unexamined Patent Publication No. (Kohyo) 5-506466
(Patent Document 3) WO2008-072754
(Patent Document 4) U.S. Patent No. 2,130,948
(Patent Document 5) U.S. Patent No. 2,558,031
(Patent Document 6) Japanese Unexamined Patent Publication No. (Kohyo) 5-506466
(Non-Patent Document 1) S.W. Shalaby, J. Polym. Sci., 11, 1 (1973)
(Non-Patent Document 2) L. Franco et al., Macromolecules, 31, 3912 (1998)

(Non-Patent Document 3) R.J. Gaymans et al., J. Polym. Sci. Polym. Chem. Ed., 22, 1373 (1984)

SUMMARY OF THE INVENTION

However, the polyoxamide resin using 1,6-hexanediamine as the diamine component disclosed in Non-Patent Document 1 cannot withstand the practical use because its melting point (about 320°C) is higher than the thermal decomposition temperature (temperature for 1% weight loss in nitrogen: about 310°C).

PA92 taught in Non-Patent Document 2 is a polymer having an intrinsic viscosity of 0.97 dL/g and a melting point of 246°C, but only a polymer having a low molecular weight not sufficient enough to mold a strong shaped body is obtained.

PA102 taught in Patent Document 2 also has a problem that only a polymer having a low molecular weight not sufficient enough to mold a strong shaped body is obtained.

The polyoxamide resin taught in Patent Document 3 is not excellent in impact resistance and oxidation resistance.

The polyoxamide resin described in Patent Document 4 uses, as the raw material, oxalic acid but not an oxalic acid diester. In the case of a polyoxamide resin, use of oxalic acid as the raw material is known to be improper because of the high polymerization temperature (Non-Patent Document 3: R.J. Gaymans et al., J. Polym. Sci. Polym. Chem. Ed., 22, 1373 (1984)). Also, the polyoxamide resin described in Patent Document 4 where the diamine component is decanediamine has as low a melting point as 229°C and fails in having a sufficiently high molecular weight.

The polyoxamide resins described in Patent Documents 5 and 6 are again a polyoxamide resin using a diamine component having a carbon number of 10 to 18, but all of these resins are produced by a method of mixing raw materials in a solvent such as ethanol or toluene. In this method, low-molecular-weight materials before growing to a sufficiently high molecular weight precipitates in the solvent and therefore, a mixture of an unreacted raw material, a solvent and a low-molecular-weight material is produced. When the mixture is heated to achieve high molecular weight, distillation or thermal decomposition of the unreacted raw material occurs before the law molecular weight material melts, and the resin cannot have a sufficiently high molecular weight.

An object to be solved by the present invention is to provide a polyoxamide resin which has a sufficiently increased high molecular weight, a broad moldable temperature range estimated from a difference between the melting point and the thermal decomposition temperature, an excellent melt moldability and furthermore, excellent impact resistance and oxidation resistance without impairing low water absorption property, chemical resistance, hydrolysis resistance, high elastic modulus, high strength and the like which are seen in an aliphatic linear polyoxamide resin. Also, in consideration of the global environment, the polyoxamide resin is preferably a polyoxamide resin utilizing a plant-derived raw material.

The present inventors have made many intensive studies to attain the above-described object, as a result, it has been found when an oxalic acid diester as the oxalic acid source and a plant-derived diamine having a carbon number of 10 to 18 (C10-C18) are used and the high molecular weight is increased by using a specific production method, a polyoxamide resin having a large difference between the melting point and the thermal decomposition temperature to realize excellent melt moldability and being excellent in the impact resistance and oxidation resistance can be obtained without impairing low water absorption property, chemical resistance, hydrolysis resistance, high elastic modulus, high strength and the like which are seen in an aliphatic linear polyoxamide resin. The present invention has been accomplished based on this finding.

The present invention is a polyoxamide resin excellent in impact resistance and oxidation resistance, comprising, as the dicarboxylic acid component, an oxalic acid and, as the diamine component, a diamine having a carbon number of 10 to 18 and preferably being derived from a plant, wherein the relative viscosity ($\eta$r) as measured at 25°C by using a polyamide resin solution having a concentration of 1.0 g/dl, with the solvent being 96% sulfuric acid, is 2.1 or more.

Also, the present invention provides an impact-resistant part containing the above-described polyoxamide resin excellent in impact resistance.

The impact-resistant part of the present invention may be in the shape of a sheet, a film, a pipe, a tube, a monofilament, a fiber or a container.

The impact-resistant part of the present invention may be any one selected from an automotive member, a computer, a computer-related device, an optical device member, an electric/electronic device, an information/communication device, a precision device, a civil engineering/building product, a medical product and a household product.

The polyoxamide resin of the present invention ensures that a sufficient increase in the high molecular weight can be achieved by melt polymerization, the moldable temperature range estimated is as broad as 90°C or more, the melt moldability is excellent and furthermore, the low water absorption property, chemical resistance, hydrolysis resistance and ethanol permeation-inhibiting performance are also excellent, and the polyamide resin can be used as an industrial resource, an industrial material or a molding material for household products, particularly as an excellent impact-resistant part. The polyoxamide excellent in the impact resistance and the impact-resistant part of the present invention can be used in practice even without using an impact resistance improver and furthermore, can be excellent in the oxidation resistance even without using an antioxidant. Also, the polyoxamide resin utilizes a plant-derived raw material and therefore, can be used as a resin material friendly to the global environment.

MODE FOR CARRYING OUT THE INVENTION

(1) Constituent Component of Polyoxamide Resin

The polyoxamide of the present invention is a polyoxamide resin comprising, as the diamine component, a diamine having a carbon number of 10 to 18, wherein the relative viscosity ($\eta r$) as measured at 25°C by using a polyamide resin solution having a concentration of 1.0 g/dl, with the solvent being 96% sulfuric acid, is 2.1 or more, preferably from 2.1 to 6.0.

As for the oxalic acid source used in the production of the polyoxamide of the present invention, an oxalic acid diester is used, and this is not particularly limited as long as it has reactivity with an amino group. Examples thereof include an oxalic acid diester of an aliphatic monohydric alcohol, such as dimethyl oxalate, diethyl oxalate, di-n-(or i-) propyl oxalate and di-n-(or i-, or tert-)butyl oxalate, an oxalic acid diester of an alicyclic alcohol, such as dicyclohexyl oxalate, and an oxalic acid diester of an aromatic alcohol, such as diphenyl oxalate.

Among these oxalic acid diesters, an oxalic acid diester of an aliphatic monohydric alcohol having a carbon number exceeding 3, an oxalic acid diester of an alicyclic alcohol, and an oxalic acid diester of an aromatic alcohol are preferred, and dibutyl oxalate and diphenyl oxalate are more preferred.

As the diamine component, a diamine having a carbon number of 10 to 18 is used. A plant-derived diamine having a carbon number of 10 to 18 is preferred.

In one embodiment, 1,10-decanediamine is preferably used. Specifically, the raw material of the 1,10-decanediamine is not particularly limited but in view of environment and stable supply, a plant-derived raw material is preferred. The plant-derived raw material of the 1,10-decanediamine specifically includes a sebacic acid produced from a caster oil come out of a castor-oil plant, and a diamine synthesized using this sebacic acid is 1,10-decanediamine and is preferred in view of environment and stable supply.

In another embodiment, a diamine having a carbon number of 11 to 18 is preferably used. A plant-derived diamine is more preferred. The plant-derived diamine having a carbon number of 11 to 18 is a diamine synthesized using a dicarboxylic acid having a carbon number of 11 to 18 produced from oils and fats such as oleic acid come out of palm and erucic acid come out of rapeseed, or a dicarboxylic acid having a carbon number of 11 to 18 produced from a tall oil come out of softwood. The diamine having a carbon number of 11 to 18 may be of long chain or branched chain. Among others, polyoxamide resins using diamines having a carbon number of 11, 12, 13, 14, 15, 16, 17 and 18 are preferred according to respective applications. Also, a diamine having a carbon number of 11 to 16 is preferred, and a diamine having a carbon number of 12 to 14 is more preferred.

Specific representative examples of the diamine having a carbon number of 11 to 18 include 1,11-diaminoundecane, 1,12-diaminododecane, 1,13-diaminotridecane, 1,14-diaminotetradecane, 1,15-diaminopentadecane, 1,16-diaminohexadecane, and 1,18-diaminooctadecane.

Specific representative examples of the diamine having a carbon number of 11 to 16 include 1,11-diaminoundecane, 1,12-diaminododecane, 1,13-diaminotridecane, 1,14-diaminotetradecane, 1,15-diaminopentadecane, and 1,16-diaminohexadecane.

Specific representative examples of the diamine having a carbon number of 12 to 14 include 1,12-diaminododecane, 1,13-diaminotridecane, and 1,14-diaminotetradecane.

(2) Production of Polyoxamide Resin

The polyoxamide resin of the present invention can be obtained by the high-pressure polymerization described in WO2008-072754. Specifically, this is a production method of a polyoxamide resin, including a step of mixing a diamine and an oxalic acid diester in a pressure vessel, and performing high-pressure polymerization in the presence of an alcohol produced by a polycondensation reaction.

A diamine is put in a pressure vessel and after nitrogen purging, the temperature is raised to the reaction temperature under a confining pressure. Thereafter, an oxalic acid diester is injected into the pressure vessel while keeping the state under a confining pressure at the reaction temperature, and a polycondensation reaction is started. The reaction temperature is not particularly limited as long as it is a temperature at which a polyoxamide produced by the reaction of the diamine with the oxalic acid diester can maintain the slurry or solution state in an alcohol produced at the same time and be kept from thermal decomposition. For example, in the case of a polyoxamide resin starting from 1,10-decanediamine and dibutyl oxalate, the reaction temperature is preferably from 150 to 250°C. Also, for example, in the case of a polyoxamide resin starting from 1,12-dodecanediamine and dibutyl oxalate, the reaction temperature is preferably from 150 to 230°C. The charging ratio between the oxalic acid diester and the diamine above is, in terms of oxalic acid diester/diamine, from 0.8 to 1.5 (by mol), preferably from 0.91 to 1.1 (by mol), more preferably from 0.99 to 1.01 (by mol).

Subsequently, while keeping the inside of the pressure-resistance vessel in the state under a confining pressure, the temperature is raised to a level not lower than the melting point of the polyoxamide resin and not higher than the temperature causing thermal decomposition. For example, in the case of a polyoxamide resin starting from 1,10-decanediamine and dibutyl oxalate, the melting point is 251°C and therefore, the temperature is raised to a range of 255 to 300°C, preferably from 260 to 290°C, more preferably from 265 to 280°C. Also, for example, in the case of a polyoxamide resin starting from 1,12-dodecanediamine and dibutyl oxalate, the melting point is 235°C and therefore, the temperature is raised to a range of 240 to 300°C, preferably from 245 to 290°C, more preferably from 250 to 280°C. The pressure in the pressure vessel until reaching a predetermined temperature is adjusted to be approximately from the saturated vapor pressure of the alcohol produced to 0.1 MPa, preferably from 1 to 0.2 MPa. After reaching the predetermined temperature, the pressure is released while distilling off the alcohol produced, and, if desired, a polycondensation reaction is continuously performed under atmospheric pressure and nitrogen stream or under reduced pressured. In the case of performing low-pressure polymerization, the ultimate pressure is preferably from 760 to 0.1 Torr.

(3) Characteristics and Physical Properties of Polyamide Resin

The polyoxamide obtained by the present invention is not particularly limited in its molecular weight, but the relative viscosity $\eta r$ as measured at 25°C by using a 96% concentrated sulfuric acid solution having a polyoxamide resin concentration of 1.0 g/dl is 2.1 or more. In view of balance between the molding processability and the physical properties of the molded article, the relative viscosity ($\eta r$) of the polyoxamide is from 2.1 to 6.0, preferably from 2.3 to 5.5, more preferably from 2.5 to 4.5.

By virtue of using an oxalic acid as the carboxylic acid component and a diamine having a carbon number of 10 to 18 as the diamine component and adjusting the relative viscosity to the range above, the polyoxamide resin of the present invention can be improved in the impact resistance as compared with a polyoxamide composed of oxalic acid, 1,9-nonanediamine and 2-methyl-1,8-octanediamine. The impact resistance is, in terms of the IZOD impact strength, preferably 51 J/m or more, more preferably from 51 to 100 J/m, and may be also preferably from 60 to 100 J/m.

By virtue of using an oxalic acid as the carboxylic acid component and a diamine having a carbon number of 10 to 18 as the diamine component and adjusting the relative viscosity to the range above, the polyoxamide resin of the present invention can be improved in the oxidation resistance as compared with a polyoxamide composed of an oxalic acid, 1,9-nonanediamine and 2-methyl-1,8-octanediamine. The oxidation resistance is, in terms of the oxidation heat quantity, preferably 600 mJ/mg or less, more preferably from 100 to 600 mJ/mg, and may be also preferably from 100 to 300 mJ/mg.

(4) Components Blendable in Polyoxamide Resin

The polyoxamide resin obtained by the present invention is produced by reacting the above-described oxalic acid ester with the diamine having a carbon number of 10 to 18, and a polyoxamide resin produced by reacting only these oxalic acid ester and diamine having a carbon number of 10 to 18 is preferred, but in the polyoxamide resin obtained by the present invention, other dicarboxylic acid components may be mixed as long as the effects of the present invention are not impaired. As for the dicarboxylic acid component other than the oxalic acid, an aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid and suberic acid, an alicyclic dicarboxylic acid such as 1,3-cyclopentanedicarboxylic acid and 1,4-cyclohexanedicarboxylic acid, and an aromatic dicarboxylic acid such as terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, dibenzoic acid, 4,4'-oxydibenzoic acid, diphenylmethane-4,4'-dicarboxylic acid, diphenylsulfone-4,4'-dicarboxylic acid and 4,4'-biphenyldicarboxylic acid may be added individually or as an arbitrary mixture thereof during the polycondensation reaction. Furthermore, a polyvalent carboxylic acid such as trimellitic acid, trimesic acid and pyromellitic acid may be also added within the range allowing for melt molding. The amount of the other dicarboxylic acid component or polyvalent carboxylic acid component which can be mixed is from less than 50 mol% to 0.01 mol%, preferably from 20 to 0.05 mol%, more preferably from 10 to 0.1 mol%, based on all carboxylic acid components including the oxalic acid.

Also, in the polyamide resin obtained by the present invention, other diamine components may be mixed as long as the effects of the present invention are not impaired. As for the diamine component other than the diamine having a carbon number of 10 to 18, an aliphatic diamine such as ethylenediamine, propylenediamine, 1,4-butanediamine, 1,6-hexanediamine, 1,8-octanediamine, 1,9-nonanediamine, 2-methyl-1,8-octanediamine, 3-methyl-1,5-pentanediamine, 2-methyl-1,5-pentanediamine, 2,2,4-trimethyl-1,6-hexanediamine, 2,4,4-trimethyl-1,6-hexanediamine and 5-methyl-1,9-nonanediamine, an alicyclic diamine such as cyclohexanediamine, methylcyclohexanediamine and isophoronediamine, and an aromatic diamine such as p-phenylenediamine, m-phenylenediamine, p-xylenediamine, m-xylenediamine, 4,4'-diaminodiphenylmethane, 4,4'-diaminodiphenylsulfone and 4,4'-diaminodiphenyl ether may be added individually or as an arbitrary mixture thereof during the polycondensation reaction. The amount of the other diamine component which can be mixed is from less than 50 mol% to 0.01 mol%, preferably from 20 to 0.05 mol%, more preferably from 10 to 0.1 mol%, based on all diamine components including the diamine having a carbon number of 10 to 18.

Furthermore, in the present invention, other polyoxamides or polyamides such as aromatic polyamide, aliphatic polyamide and alicyclic polyamide may be mixed as long as the effects of the present invention are not impaired. In addition, a thermoplastic polymer or elastomer other than a polyamide may be blended similarly. The blending amount thereof varies depending on the kind but is from 10 to 100 parts by mass, preferably from 10 to 50 parts by mass, more preferably from 10 to 30 parts by mass, per 100 parts by mass of the polyamide resin of the present invention.

In the polyoxamide resin obtained by the present invention, if desired, a stabilizer such as copper compound, a colorant, an ultraviolet absorber, a light stabilizer, an antioxidant, an antistatic agent, a flame retardant, a crystallization accelerator, a glass fiber, a plasticizer, a lubricant and the like may be added during or after the polycondensation reaction. The polyoxamide resin excellent in the impact resistance and oxidation resistance of the present invention is characterized by being usable in practice even without using an impact resistance improver or an antioxidant, but, if desired, an impact resistance improver or an antioxidant may be added. The blending amount thereof varies depending on the kind of the additive but is from 0.01 to 50 parts by mass, preferably from 1 to 40 parts by mass, more preferably from 1 to 30 parts by mass, per 100 parts by mass of the polyamide resin of the present invention.

(5) Molding Process of Polyoxamide Resin

As for the method to mold the polyoxamide resin obtained by the present invention, all known molding methods applicable to a polyamide, such as injection, extrusion, blow, press, roll, foam, vacuum/pressure and stretch, can be employed, and the polyoxamide resin can be formed into a film, a sheet, a molded article, a fiber or the like by such a molding method.

(6) Impact-Resistant Part

The impact-resistant part obtained by the present invention can be used as an impact-resistant part in the form of various molded articles to which a polyamide molded product has been conventionally applied, such as sheet, film, pipe, tube, monofilament, fiber and container, for example, in an automobile part, a computer, a computer-related device, an optical device member, an electric/electronic device, an information/communication device, a precision device, a civil engineering/building product, a medical product, and a household product.

The impact strength of the impact-resistant part of the present invention, as measured by the measuring method specified in the Examples, may be 50 J/m or more, preferably 60 J/m or more, more preferably 70 J/m or more, still more preferably 75 J/m or more. Also, the oxidation heat quantity as measured by the measuring method specified in the Examples may be 550 mJ/m or less, preferably 400 mJ/m or less, still more preferably 300 mJ/m or less. That is, the impart-resistant part of the present invention can be an oxidation-resistant part.

EXAMPLES

[Physical Properties Measurement, Molding, Evaluation Method]

The present invention is described in greater detail below by referring to the Examples, but the present invention is not limited thereto. Incidentally, in the Examples, the measurements of relative viscosity, melting point, crystallization temperature, oxidation heat quantity and saturated water absorption percentage, the evaluations of chemical resistance and hydrolysis resistance, the film molding, the measurements of tensile strength, flexural modulus, impact strength and thermal deformation temperature, and the ethanol permeability were performed by the following methods.

(1) Relative Viscosity ($\eta r$)

The $\eta r$ was measured at 25°C by means of an Ostwald viscometer by using a 96%-sulfuric acid solution of the polyamide (concentration: 1.0 g/dl).

(2) Melting Point (Tm) and Crystallization Temperature (Tc)

The Tm and Tc were measured in a nitrogen atmosphere by using PYRIS Diamond DSC manufactured by Perkin-Elmer. The temperature was raised from 30°C to 280°C at a rate of 20°C/min (referred to as a temperature-rise first run), kept at 280°C for 5 minutes, then lowered to 30°C at a rate of 20°C/min (referred to as a temperature-drop first run) and thereafter raised to 280°C at a rate of 20°C/min (referred to as a temperature-rise second run). In the obtained DSC chart, the exothermic peak temperature in the temperature-drop first run was designated as Tc, and the endothermic peak temperature in the temperature-rise second run was designated as Tm.

(3) Film Molding

Film molding was performed using a vacuum press, TMB-10, manufactured by Toho Machinery Co., Ltd. The melted resin was maintained at 280°C for 5 minutes in a reduced-pressure atmosphere of 500 to 700 Pa, then subjected to film molding by pressing under 5 MPa for 1 minute and after returning the reduced-pressure atmosphere to atmospheric pressure, cooled/crystallized at room temperature under 5 MPa for 1 minute to obtain a film.

(4) Oxidation Heat Quantity

The oxidation resistance of the film obtained in the film molding of (3) was evaluated using RDC220 manufactured by Seiko Instruments Inc. The obtained film was set in RDC220 manufactured by Seiko Instruments Inc.; under a nitrogen flow at 100 ml/min, the temperature was raised from room temperature to 190°C at a temperature rise rate of 20°C/min and kept at 190°C; 60 minutes after the start, the nitrogen flow was changed to an oxygen flow at 100 ml/min; and the heat value of the film was measured. The heat value measured was taken as the oxidation heat quantity and used as the indication of oxidation resistance.

(5) Saturated Water Absorption Percentage

A film (dimension: 20 mm x 10 mm, thickness: 0.25 mm, weight: about 0.05 g) obtained by molding the polyoxamide resin under the conditions of (6) was dipped in ion-exchanged water at 23°C, and the weight of the film was measured by pulling out the film every predetermined time period. When the film weight showed three consecutive increases in the range of 0.2%, the absorption of water into the polyamide resin film was judged as saturated, and the saturated water absorption (%) was calculated according to the formula (1) from the weight (X g) of the film before dipping in water and the weight (Y g) of the film when reached saturation.

$$\text{Saturated water absorption (\%)} = \frac{Y - X}{X} \times 100 \qquad (1)$$

(6) Chemical Resistance

The hot-pressed film of the polyoxamide obtained was dipped in chemicals recited below for 7 days, and the weight residual ratio (%) and appearance change of the film were observed. The test was performed on a sample dipped at 23°C or less in each solution of a concentrated hydrochloric acid, a 64% sulfuric acid, an aqueous 30% sodium hydroxide solution and an aqueous 5% potassium permanganate solution and on a sample dipped at 50°C in benzyl alcohol.

(7) Hydrolysis Resistance

The hot-pressed film of the polyoxamide obtained was placed in an autoclave and treated at 121°C for 60 minutes in each of water, 0.5 mol/l sulfuric acid and an aqueous 1 mol/l sodium hydroxide solution, and the weight residual ratio (%) and appearance change after the treatment were examined.

(8) Mechanical Properties

The measurements of the following [1] to [4] were performed using a test specimen formed by injection molding at a resin temperature of 280°C and a mold temperature of 80°C.

[1] Tensile Test (Tensile Strength at Yield Point)

The measurement was performed in accordance with ASTM D638 by using a test specimen of Type I described in ASTM D638.

[2] Bending Test (Flexural Modulus)

The measurement was performed at 23°C in accordance with ASTM D790 by using a test specimen having a specimen dimension of 129 mm x 12.7 mm x 3.2 mm.

[3] Impact Strength (Izod with notch)

The measurement was performed at 23°C in accordance with ASTM D256 by using a test specimen having a specimen dimension of 63.5 mm x 12.7 mm x 3.2 mm.

[4] Load-Induced Deflection Temperature

The measurement was performed under a load of 1.82 MPa in accordance with ASTM D648 by using a test specimen having a specimen dimension of 129 mm x 12.7 mm x 3.2 mm.

(9) Ethanol Permeability Coefficient

The ethanol permeability coefficient at 60°C was measured on a heat-pressed film with $\phi$75 mm and a thickness of 0.1 mm by using a gas permeability measuring device. The ethanol permeability coefficient was calculated according to the following formula. The permeation area of the sample is 78.5 cm$^2$.

$$\text{Ethanol permeability coefficient } (g \cdot mm/m^2 \cdot day \cdot atom) =$$
$$[\text{permeation weight (g)} \times \text{film thickness (mm)}]/[\text{permeation}$$
$$\text{area } (m^2) \times \text{number of days (day)} \times \text{pressure (atom)}]$$

[Example 1]

(i) Pre-Polycondensation Step

A 5 L-volume pressure vessel equipped with a stirrer, a thermometer, a torque meter, a pressure gauge, a nitrogen gas inlet, a pressure release port, a polymer takeout port and a raw material charging port to which a raw material feed pump was directly connected by an SUS316-made pipe with a diameter of 1/8 inch, was charged with 875.0 g (5.0809 mol) of plant-derived 1,10-decanediamine, and an operation of pressurizing the inside of the pressure vessel to 3.0 MPa with a nitrogen gas having a purity of 99.9999% and then releasing the nitrogen gas to a normal pressure was repeated 5 times. Subsequently, the inside of the system was heated under a confining pressure and after raising the internal temperature to 190°C over 20 minutes, 1,027.6 g (5.0808 mol) of dibutyl oxalate was injected into the reaction vessel at a flow speed of 65 ml/min over about 17 minutes by the raw material feed pump. The internal pressure in the pressure vessel immediately after total volume injection increased to 0.65 MPa due to 1-butanol produced by the polycondensation reaction, and the internal temperature rose to 197°C.

(ii) Post-Polycondensation Step

Removal by distillation of butanol produced immediately after injection was started and while keeping the internal pressure at 0.50 MPa, the internal temperature was raised to 250°C over 2 hours. Soon after the internal temperature reached 250°C, 1-butanol produced by the polycondensation reaction was withdrawn from the pressure release port over 20 minutes. After the pressure release, temperature rising was started under a nitrogen flow at 260 ml/min, and the internal temperature was increased to 270°C over 1 hour. The reaction was allowed to proceed at 270°C for 1 hour and thereafter, stirring was stopped. The inside of the system was pressurized to 3 MPa with nitrogen and left standing still for 10 minutes so as to remove air bubbles in the molten resin. Subsequently, the pressure was released to 0.5 MPa, and the polymerization product was withdrawn as a string from the bottom of the pressure vessel. The string-like polymerization product was immediately cooled with water, and the water-cooled string-like polymerization product was pelletized by a pelletizer. The obtained polymerization product was a tough polymer.

This polyoxamide was then injection-molded at a cylinder temperature of 280°C and a mold temperature of 80°C under an injection peak pressure of 140 MPa, and the molded article obtained was measured for various physical values. The results obtained are shown in Table 5 below.

[Example 2]

(i) Pre-Polycondensation Step

A 5 L-volume pressure vessel equipped with a stirrer, a thermometer, a torque meter, a pressure gauge, a nitrogen gas inlet, a pressure release port, a polymer takeout port and a raw material charging port to which a raw material feed pump was directly connected by an SUS316-made pipe with a diameter of 1/8 inch, was charged with 875.05 g (5.0812 mol) of plant-derived 1,10-decanediamine, and an operation of pressurizing the inside of the pressure vessel to 3.0 MPa with a nitrogen gas having a purity of 99.9999% and then releasing the nitrogen gas to a normal pressure was repeated 5 times. Subsequently, the inside of the system was heated under a confining pressure and after raising the internal temperature to 190°C over 20 minutes, 1,027.14 g (5.0812 mol) of dibutyl oxalate was injected into the reaction vessel at a flow speed of 65 ml/min over about 17 minutes by the raw material feed pump, whereupon the temperature was raised. The internal pressure in the pressure vessel immediately after total volume injection increased to 0.75 MPa due to 1-butanol produced by the polycondensation reaction, and the internal temperature rose to 193°C.

(ii) Post-Polycondensation Step

Removal by distillation of butanol produced immediately after injection was started and while keeping the internal pressure at 0.50 MPa, the internal temperature was raised to 250°C over 2 hours. Soon after the internal temperature reached 250°C, 1-butanol produced by the polycondensation reaction was withdrawn from the pressure release port over 20 minutes. After the pressure release, temperature rising was started under a nitrogen flow at 260 ml/min, and the internal temperature was raised to 270°C over 1 hour. The reaction was allowed to proceed at 270°C for 1 hour and thereafter, stirring was stopped. The inside of the system was pressurized to 3 MPa with nitrogen and left standing still for 10 minutes so as to remove air bubbles in the molten resin. Subsequently, the pressure was released to 0.5 MPa, and the polymerization product was withdrawn as a string from the bottom of the pressure vessel. The string-like polymerization product was immediately cooled with water, and the water-cooled string-like polymerization product was pelletized by a pelletizer. The obtained polymerization product was a tough polymer.
This polyoxamide was then injection-molded at a cylinder temperature of 280°C and a mold temperature of 80°C under an injection peak pressure of 140 MPa, and the molded article obtained was measured for various physical values. The results obtained are shown in Table 5 below.

[Comparative Example 1]

(i) Pre-Polycondensation Step

The inside of a separable flask having an internal volume of 5 L and being equipped with a stirrer, a reflux condenser, a nitrogen inlet tube and a raw material charging port was purged with a nitrogen gas having a purity of 99.9999%, and 2,000 ml of dehydrated toluene and 1,031 g (5.9868 mol) of 1,10-decanediamine were charged into the flask. This separable flask was placed in an oil bath and after raising the temperature to 50°C, 1,211 g (5.9871 mol) of dibutyl oxalate was charged. Subsequently, the temperature of the oil bath was raised to 130°C, and the reaction was allowed to proceed for 5 hours under reflux. Incidentally, all operations from the charging of raw materials until the completion of reaction were performed under a nitrogen flow at 50 ml/min.

(ii) Post-Polycondensation Step

The pre-polymerization product obtained by the operations above was charged into a 5 L-volume pressure vessel equipped with a stirrer, a thermometer, a torque meter, a pressure gauge, a nitrogen gas inlet and a polymer takeout port, and an operation of keeping the inside of the pressure vessel under a pressure of 3.0 MPa or more and then releasing the nitrogen gas to a normal pressure was repeated 5 times. Thereafter, the temperature in the system was raised under a nitrogen flow and a normal pressure, and the internal temperature was raised to 120°C over 1.5 hours. At this time, removal by distillation of butanol was confirmed. While removing butanol by distillation, the temperature was raised to 270°C over 5 hours and the reaction was allowed to proceed for 2 hours. Subsequently, stirring was stopped and after standing still for 10 minutes, the inside of the system was pressurized to 3.0 MPa with nitrogen. The polymerization product was withdrawn as a string from the bottom of the pressure vessel, and the string-like polymerization product was immediately cooled with water. The water-cooled string-like polymerization product was pelletized by a pelletizer. The obtained polymerization product was a white tough polymer.
This polyoxamide was then injection-molded at a cylinder temperature of 280°C and a mold temperature of 80°C under an injection peak pressure of 140 MPa, and the molded article obtained was measured for various physical values. The results obtained are shown in Table 5 below.

[Comparative Example 2]

(i) Pre-Polycondensation Step

The inside of a separable flask having an internal volume of 5 L and being equipped with a stirrer, an air-cooling tube, a nitrogen inlet tube and a raw material charging port was purged with a nitrogen gas having a purity of 99.9999%, and 1,211 g (5.9871 mol) of dibutyl oxalate charged into the flask. While keeping this vessel at 20°C, 807.6 g (5.102 mol) of non-plant-derived 1,9-nonanediamine and 142.5 g (0.9004 mol) of 2-methyl-1,8-octanediamine were added with stirring, and the polycondensation reaction was allowed to proceed. Incidentally, all operations from the charging of raw materials until the completion of reaction were performed under a nitrogen flow at 200 ml/min.

(ii) Post-Polycondensation Step

The pre-polymerization product obtained by the operations above was charged into a 5 L-volume pressure vessel equipped with a stirrer, a thermometer, a torque meter, a pressure gauge, a nitrogen gas inlet and a polymer takeout port, and an operation of keeping the inside of the pressure vessel under a pressure of 3.0 MPa or more and then releasing the nitrogen gas to a normal pressure was repeated 5 times. Thereafter, the temperature in the system was raised under a nitrogen flow and a normal pressure, and the internal temperature was raised to 120°C over 1.5 hours. At this time, removal of butanol by distillation was confirmed. While removing butanol by distillation, the temperature was raised to 260°C over 5 hours, and the reaction was allowed to proceed for 2 hours. Subsequently, the temperature in the system was lowered to 250°C, and stirring was stopped. After standing still for 25 minutes, the inside of the system was pressurized to 3.5 MPa with nitrogen, and the polymerization product was withdrawn as a string from the bottom of the pressure vessel. The string-like polymerization product was immediately cooled with water, and the water-cooled string-like polymerization product was pelletized by a pelletizer. The obtained polymerization product was a white tough polymer.

This polyoxamide was then injection-molded at a cylinder temperature of 280°C and a mold temperature of 80°C under an injection peak pressure of 140 MPa, and the molded article obtained was measured for various physical values. The results obtained are shown in Table 5 below.

[Comparative Example 3]

(i) Pre-Polycondensation Step

The inside of a separable flask having an internal volume of 5 L and being equipped with a stirrer, an air-cooling tube, a nitrogen inlet tube and a raw material charging port was purged with a nitrogen gas having a purity of 99.9999%, and 1,211 g (5.9871 mol) of dibutyl oxalate charged into the flask. While keeping this vessel at 20°C, 56.86 g (0.3592 mol) of non-plant-derived 1,9-nonanediamine and 890.8 g (5.6279 mol) of 2-methyl-1,8-octanediamine were added with stirring, and the polycondensation reaction was allowed to proceed. Incidentally, all operations from the charging of raw materials until the completion of reaction were performed under a nitrogen flow at 200 ml/min.

(ii) Post-Polycondensation Step

The pre-polymerization product obtained by the operations above was charged into a 5 L-volume pressure vessel equipped with a stirrer, a thermometer, a torque meter, a pressure gauge, a nitrogen gas inlet and a polymer takeout port, and an operation of keeping the inside of the pressure vessel under a pressure of 3.0 MPa or more and then releasing the nitrogen gas to a normal pressure was repeated 5 times. Thereafter, the temperature in the system was raised under a nitrogen flow and a normal pressure, and the internal temperature was raised to 120°C over 1.5 hours. At this time, removal of butanol by distillation was confirmed. While removing butanol by distillation, the temperature was raised to 260°C over 5 hours, and the reaction was allowed to proceed for 2 hours. Subsequently, the temperature in the system was lowered to 250°C, and stirring was stopped. After standing still for 25 minutes, the inside of the system was pressurized to 3.5 MPa with nitrogen, and the polymerization product was withdrawn as a string from the bottom of the pressure vessel. The string-like polymerization product was immediately cooled with water, and the water-cooled string-like polymerization product was pelletized by a pelletizer. The obtained polymerization product was a white tough polymer.

This polyoxamide was then injection-molded at a cylinder temperature of 280°C and a mold temperature of 80°C under an injection peak pressure of 140 MPa, and the molded article obtained was measured for various physical values. The results obtained are shown in Table 5 below.

In [Comparative Example 4], [Comparative Example 5] and [Comparative Example 6], nylon 6, nylon 66 and nylon 12, which are non-plant-derived, were used, respectively.

The diamine composition, $\eta r$, melting point (Tm), crystallization temperature (Tc) and oxidation heat quantity of each of polyoxamides and polyamides obtained in Examples 1 and 2 and Comparative Examples 1 to 4 are shown in Table 1. The polyoxamides obtained in Examples 1 and 2 showed a low oxidation heat quantity compared with Comparative Examples 2 and 3. The polyoxamide resin of the present invention in which the carbon number of the diamine component is 10 is excellent in oxidation resistance.

Table 1

| Diamine composition (mol ratio) | Comparative Example 1 decanediamine | Example 1 decanediamine | Example 2 decanediamine | Comparative Example 2 2-methyl-1,8-octanediamine/1,9-nonanediamine=15/85 | Comparative Example 3 2-methyl-1,8-octanediamine/1,9-nonanediamine=94/6 | Comparative Example 4 |
|---|---|---|---|---|---|---|
| Relative viscosity $\eta$r *1 | 2.01 (0.99) | 2.16 (1.02) | 2.56 (1.20) | 3.20 | 3.27 | 2.64 |
| Melting point Tm (°C) *2 | 251 | 251 | 251 | 235 | 230 | 220 |
| Crystallization temperature Tc (°C) *2 | 227 | 227 | 227 | 212 | 205 | - |
| Oxidation heat quantity (mJ/mg) *3 | 270 | 260 | 264 | 402 | 732 | - |

*1 Solvent: a 96% sulfuric acid solution; concentration: 1.0 g/dl; temperature: 25°C, the numeral in parenthesis is the intrinsic viscosity $\eta$ sp/c (dL/g) described in Japanese Unexamined Patent Publication (Kohyo) No. 5-506466
*2 DSC Measurement, nitrogen atmosphere; temperature rise rate: 10°C/min
*3 DSC Measurement, oxygen atmosphere; temperature: 190°C

EP 2 617 755 A1

[Comparative Example 4]

A film was formed using nylon 6 (UBE Nylon 1015B, produced by Ube Industries, Ltd.) in place of the polyamide resin obtained by the present invention. The resulting nylon 6 film was a colorless transparent tough film. The saturated water absorption percentage, chemical resistance, hydrolysis resistance and ethanol permeability of this film were evaluated. The results are shown in Tables 2, 3 and 4, respectively.

[Comparative Example 5]

A film was formed using nylon 66 (UBE Nylon 2020B, produced by Ube Industries, Ltd.) in place of the polyamide resin obtained by the present invention. The resulting nylon 66 film was a colorless transparent tough film. The saturated water absorption of this film was evaluated. The results are shown in Table 2.

[Comparative Example 6]

A film was formed using nylon 12 (UBESTA 3014U, produced by Ube Industries, Ltd.) in place of the polyamide resin obtained by the present invention. The resulting nylon 12 film was a colorless transparent tough film. The saturated water absorption percentage and chemical resistance of this film were evaluated. The results are shown in Tables 2 and 3, respectively.

The mechanical properties of the injection molded article formed using each of the polyamide resins obtained in Examples 1 and 2 and Comparative Examples 1 to 4 are shown in Table 5. The polyoxamides obtained in Examples 1 and 2 showed a small relative viscosity as compared with Comparative Examples 2 and 3, nevertheless, had a high Izod impact strength. The polyoxamide resin of the present invention is excellent in impact resistance.

As seen from Tables 2, 3, 4, 5 and 6, the polyoxamide resin of the present invention using 1,10-decanediamine as the diamine component has a property of low water absorption as compared with nylon 6, nylon 66 or nylon 12 and is not only excellent in chemical resistance, hydrolysis resistance and ethanol barrier performance but also excellent in the Izod impact strength in the dry state.

Table 2: Saturated Water Absorption Percentage

| | Comparative Example | Example | | Comparative Example | | | | |
|---|---|---|---|---|---|---|---|---|
| | 1 | 1 | 2 | 2 | 3 | 4 | 5 | 6 |
| Saturated water absorption percentage (%) | 0.9 | 0.8 | 0.8 | 1.3 | 0.9 | 10.7 | 5.6 | 1.6 |

Table 3: Chemical Resistance

| Chemicals | Weight Residual Ratio (%), Appearance Change | | |
|---|---|---|---|
| | Example 1 | Comparative Example 4 | Comparative Example 6 |
| Concentrated hydrochloric acid | 100 | unrecoverable | 128, surface whitening |
| 64% Sulfuric acid | 100 | unrecoverable | 153, whitening |
| 30% NaOH | 100 | 103 | 101 |
| 5% $K_2MnO_4$ | 100 | unrecoverable | 101 |
| Formic acid | 117 | unrecoverable | 135 |
| Chloroform | 103 | 112 | 121 |
| m-Cresol | 101 | unrecoverable | unrecoverable |
| Benzyl alcohol (50°C) | 103 | 133, deformation | 122, deformation |

Table 4: Hydrolysis Resistance

| Aqueous Solution | Weight Residual Ratio (%), Appearance Change | |
|---|---|---|
| | Example 1 | Comparative Example 4 |
| Water (pH 7) | 100 | 96 |
| 0.5 mol/1 Sulfuric acid (pH 1) | 100 | 96 (degradation) |
| 1 mol/1 NaOH (pH 14) | 100 | 96 |
| Measuring conditions: 121°C, 60 minutes | | |

Table 5: Mechanical Properties

| Mechanical Properties | Comparative Example | Example | | Comparative Example | | |
|---|---|---|---|---|---|---|
| | 1 | 1 | 2 | 2 | 3 | 4 |
| Tensile strength at yield point (MPa) | 72 | 72 | 74 | 69 | 71 | 71 |
| Flexural modulus (GPa) | 2.3 | 2.3 | 2.3 | 2.3 | 2.3 | 2.4 |
| Impact strength (Izod with notch) (J/m) | 41 | 51 | 83 | 44 | 45 | 59 |
| Load-induced deflection temperature (1.82 MPa) (°C) | 118 | 118 | 119 | 118 | 118 | 75 |

Table 6: Ethanol Permeability Coefficient

| | Example 1 | Comparative Example 4 |
|---|---|---|
| Ethanol permeability coefficient (g·mm/m$^2$·day·atom) | 0.9 | 21 |

[Example 11]

(i) Pre-Polycondensation Step

A 5 L-volume pressure vessel equipped with a stirrer, a thermometer, a torque meter, a pressure gauge, a nitrogen gas inlet, a pressure release port, a polymer takeout port and a raw material charging port to which a raw material feed pump was directly connected by an SUS316-made pipe with a diameter of 1/8 inch, was charged with 929.9 g (4.641 mol) of 1,12-dodecanediamine, and an operation of pressurizing the inside of the pressure vessel to 3.0 MPa with a nitrogen gas having a purity of 99.9999% and then releasing the nitrogen gas to a normal pressure was repeated 5 times. Subsequently, the inside of the system was heated under a confining pressure and after raising the internal temperature to 190°C over 20 minutes, 988.0 g (4.640 mol) of dibutyl oxalate was injected into the reaction vessel at a flow speed of 65 ml/min over about 17 minutes by the raw material feed pump. The internal pressure in the pressure vessel immediately after total volume injection increased to 0.54 MPa due to 1-butanol produced by the polycondensation reaction, and the internal temperature rose to 192°C.

(ii) Post-Polycondensation Step

Removal by distillation of butanol produced immediately after injection was started and while keeping the internal pressure at 0.50 MPa, the internal temperature was raised to 235°C over 2 hours. Soon after the internal temperature reached 235°C, 1-butanol produced by the polycondensation reaction was withdrawn from the pressure release port over 20 minutes. After the pressure release, temperature rising was started under a nitrogen flow at 260 ml/min, and the internal temperature was raised to 260°C over 1 hour. The reaction was allowed to proceed at 260°C for 1 hour and thereafter, stirring was stopped. The inside of the system was pressurized to 3 MPa with nitrogen and after standing for 10 minutes, the pressure was released to an internal pressure of 0.1 MPa. The polymerization product was withdrawn as a string from the bottom of the pressure vessel, and the string-like polymerization product was immediately cooled with water. The water-cooled string-like polymerization product was pelletized by a pelletizer. The obtained polymerization product was a tough polymer.

This polyoxamide was then injection-molded at a cylinder temperature of 280°C and a mold temperature of 80°C under an injection peak pressure of 140 MPa, and the molded article obtained was measured for various physical values. The results obtained are shown in Table 11 below.

[Example 12]

(i) Pre-Polycondensation Step

A 5 L-volume pressure vessel equipped with a stirrer, a thermometer, a torque meter, a pressure gauge, a nitrogen gas inlet, a pressure release port, a polymer takeout port and a raw material charging port to which a raw material feed pump was directly connected by an SUS316-made pipe with a diameter of 1/8 inch, was charged with 930.9 g (4.646 mol) of 1,12-dodecanediamine, and an operation of pressurizing the inside of the pressure vessel to 3.0 MPa with a nitrogen gas having a purity of 99.9999% and then releasing the nitrogen gas to a normal pressure was repeated 5 times. Subsequently, the inside of the system was heated under a confining pressure and after raising the internal temperature to 190°C over 20 minutes, 989.2 g (4.646 mol) of dibutyl oxalate was injected into the reaction vessel at a flow speed of 65 ml/min over about 17 minutes by the raw material feed pump. The internal pressure in the pressure vessel immediately after total volume injection increased to 0.55 MPa due to 1-butanol produced by the polycondensation reaction, and the internal temperature rose to 193°C.

(ii) Post-Polycondensation Step

Removal by distillation of butanol produced immediately after injection was started and while keeping the internal pressure at 0.50 MPa, the internal temperature was raised to 235°C over 2 hours. Soon after the internal temperature reached 235°C, 1-butanol produced by the polycondensation reaction was withdrawn from the pressure release port over 20 minutes. After the pressure release, temperature rising was started under a nitrogen flow at 260 ml/min, and the internal temperature was raised to 260°C over 1 hour. The reaction was allowed to proceed at 260°C for 1 hour and thereafter, stirring was stopped. The inside of the system was pressurized to 3 MPa with nitrogen and after standing for 10 minutes, the pressure was released to an internal pressure of 0.1 MPa. The polymerization product was withdrawn as a string from the bottom of the pressure vessel, and the string-like polymerization product was immediately cooled with water. The water-cooled string-like polymerization product was pelletized by a pelletizer. The obtained polymerization product was a tough polymer.
This polyoxamide was then injection-molded at a cylinder temperature of 280°C and a mold temperature of 80°C under an injection peak pressure of 140 MPa, and the molded article obtained was measured for various physical values. The results obtained are shown in Table 11 below.

[Example 13]

(i) Pre-Polycondensation Step

A 5 L-volume pressure vessel equipped with a stirrer, a thermometer, a torque meter, a pressure gauge, a nitrogen gas inlet, a pressure release port, a polymer takeout port and a raw material charging port to which a raw material feed pump was directly connected by an SUS316-made pipe with a diameter of 1/8 inch, was charged with 1,092.4 g (3.847 mol) of 1,18-octadecanediamine, and an operation of pressurizing the inside of the pressure vessel to 3.0 MPa with a nitrogen gas having a purity of 99.9999% and then releasing the nitrogen gas to a normal pressure was repeated 5 times. Subsequently, the inside of the system was heated under a confining pressure and after raising the internal temperature to 190°C over 20 minutes, 777.5 g (3.846 mol) of dibutyl oxalate was injected into the reaction vessel at a flow speed of 65 ml/min over about 16 minutes by the raw material feed pump, whereupon the temperature was raised. The internal pressure in the pressure vessel immediately after total volume injection increased to 0.50 MPa due to 1-butanol produced by the polycondensation reaction, and the internal temperature rose to 190°C.

(ii) Post-Polycondensation Step

Removal by distillation of butanol produced immediately after injection was started and while keeping the internal pressure at 0.50 MPa, the internal temperature was raised to 200°C over 30 minutes. Soon after the internal temperature reached 200°C, 1-butanol produced by the polycondensation reaction was withdrawn from the pressure release port over 20 minutes. After the pressure release, temperature rising was started under a nitrogen flow at 260 ml/min, and the internal temperature was raised to 230°C over 1 hour. The reaction was allowed to proceed at 230°C for 1 hour and thereafter, stirring was stopped. The inside of the system was pressurized to 3 MPa with nitrogen and after standing for 10 minutes, the pressure was released to an internal pressure of 0.1 MPa. The polymerization product was withdrawn as a string from the bottom of the pressure vessel, and the string-like polymerization product was immediately cooled with water. The water-cooled string-like polymerization product was pelletized by a pelletizer. The obtained polymerization product was a tough polymer.

This polyoxamide was then injection-molded at a cylinder temperature of 250°C and a mold temperature of 80°C under an injection peak pressure of 140 MPa, and the molded article obtained was measured for various physical values. The results obtained are shown in Table 11 below.

The diamine composition, $\eta$r, melting point (Tm), crystallization temperature (Tc) and oxidation heat quantity of each of polyoxamides and polyamides obtained in Examples 11 to 13 and Comparative Examples 2 to 4 are shown in Table 7. The polyoxamide obtained in Examples 11 and 12 showed a low oxidation heat quantity as compared with Comparative Example 3. The polyoxamide resin of the present invention where the carbon number of the diamine component is from 11 to 18 is excellent in oxidation resistance.

The mechanical properties of the injection molded article formed using each of the polyamide resins obtained in Example 11, Example 12, Example 13, Comparative Example 2, Comparative Example 3 and Comparative Example 4 are shown in Table 11. The polyoxamides obtained in Example 11, Example 12 and Example 13 showed a high Izod impact strength as compared with Comparative Example 2, Comparative Example 3 and Comparative Example 4. The polyoxamide resin of the present invention where the carbon number of the diamine component is from 11 to 18 is excellent in impact resistance.

As seen from Tables 8, 9, 10 and 11, the polyoxamide resin of the present invention where the carbon number of the diamine component is from 11 to 18 has a property of low water absorption as compared with nylon 6, nylon 66 or nylon 12 and is not only excellent in chemical resistance and hydrolysis resistance but also excellent in the Izod impact strength in the dry state.

Table 7

| Diamine composition | Example 11 dodecanediamine | Example 12 dodecanediamine | Example 13 octadecanediamine | Comparative Example 2 2-methyl-1,8-octanediamine/1,9-nonanediamine=15/85 | Comparative Example 3 2-methyl-1,8-octanediamine/1,9-nonanediamine=94/6 | Comparative Example 4 |
|---|---|---|---|---|---|---|
| Relative viscosity $\eta r$ *1 | 2.50 | 2.56 | 2.19 | 3.20 | 3.27 | 2.64 |
| Melting point Tm (°C) *2 | 235 | 235 | 202 | 235 | 230 | 220 |
| Crystallization temperature Tc (°C) *2 | 212 | 212 | 177 | 212 | 205 | - |
| Oxidation heat quantity (mJ/mg) *3 | 531 | 530 | 545 | 402 | 732 | - |

*1 Solvent: a 96% sulfuric acid solution; concentration: 1.0 g/dl; temperature: 25°C *2 DSC Measurement, nitrogen atmosphere; temperature rise rate: 10°C/min *3 DSC Measurement, oxygen atmosphere; temperature: 190°C

Table 8: Saturated Water Absorption Percentage

| | Example | | | Comparative Example | | | | |
|---|---|---|---|---|---|---|---|---|
| | 11 | 12 | 13 | 2 | 3 | 4 | 5 | 6 |
| Saturated water absorption percentage (%) | 0.8 | 0.8 | 0.8 | 1.3 | 0.9 | 10.7 | 5.6 | 1.6 |

Table 9: Chemical Resistance

| Chemicals | Weight Residual Ratio (%), Appearance Change | | |
|---|---|---|---|
| | Example 12 | Comparative Example 4 | Comparative Example 6 |
| Concentrated hydrochloric acid | 100 | unrecoverable | 128, surface whitening |
| 64% Sulfuric acid | 100 | unrecoverable | 153, whitening |
| 30% NaOH | 100 | 103 | 101 |
| 5% $K_2MnO_4$ | 100 | unrecoverable | 101 |
| Benzyl alcohol (50°C) | 101 | 133, deformation | 122, deformation |

Table 10: Hydrolysis Resistance

| Aqueous Solution | Weight Residual Ratio (%), Appearance Change | |
|---|---|---|
| | Example 12 | Comparative Example 4 |
| Water (pH 7) | 100 | 96 |
| 0.5 mol/1 Sulfuric acid (pH 1) | 100 | 96 (degradation) |
| 1 mol/1 NaOH (pH 14) | 100 | 96 |
| Measuring conditions: 121°C, 60 minutes | | |

Table 11: Mechanical Properties

| Mechanical Properties | Example | | | Comparative Example | | |
|---|---|---|---|---|---|---|
| | 11 | 12 | 13 | 2 | 3 | 4 |
| Tensile strength at yield point (MPa) | 71 | 73 | 68 | 69 | 71 | 71 |
| Flexural modulus (GPa) | 1.9 | 2.0 | 1.8 | 2.3 | 2.3 | 2.4 |
| Impact strength (Izod with notch) (J/m) | 72 | 77 | 76 | 44 | 45 | 59 |
| Load-induced deflection temperature (1.82 MPa) (°C) | 116 | 116 | 104 | 118 | 118 | 75 |

INDUSTRIAL APPLICABILITY

The polyoxamide resin of the present invention is a polyoxamide resin excellent in the low water absorption property, chemical resistance, hydrolysis resistance and ethanol permeation-inhibiting performance and also excellent in the melt molding processability, impact resistance and oxidation resistance and can be used as an industrial resource, an industrial material or a molding material for household products. For example, the polyoxamide resin can be used as an impact-resistant part in the form of various molded articles such as sheet, film, pipe, tube, monofilament and fiber, in an automobile member, a computer, a computer-related device, an optical device member, an electric/electronic device, an information/communication-related device, a precision device, a civil engineering/building product, a medical product, a household product and the like.

## EP 2 617 755 A1

**Claims**

1. A polyoxamide resin comprising oxalic acid as a dicarboxylic acid component and a diamine having a carbon number of 10 to 18 as a diamine component, wherein
the relative viscosity ($\eta$r) as measured at 25°C by means of an Ostwald viscometer by using a solution having a polyoxamide resin concentration of 1.0 g/dl, with the solvent being 96% sulfuric acid, is 2.1 or more.

2. The polyoxamide resin according to claim 1, wherein the diamine component is 1,10-decanediamine having a carbon number of 10.

3. The polyoxamide resin according to claim 1, wherein the diamine component is a diamine having a carbon number of 11 to 18.

4. The polyoxamide resin according to any one of claims 1 to 3, wherein the relative viscosity ($\eta$r) as measured at 25°C by means of an Ostwald viscometer by using a solution having a polyoxamide resin concentration of 1.0 g/dl, with the solvent being 96% sulfuric acid, is from 2.1 to 6.0.

5. The polyoxamide resin according to any one of claims 1 to 4, wherein said diamine component is a plant-derived diamine.

6. The polyoxamide resin according to any one of claims 1 to 5, which further contains a dicarboxylic acid component other than oxalic acid in an amount of 20 to 0.05 mol% based on all carboxylic acid components including the oxalic acid.

7. The polyoxamide resin according to any one of claims 1, 2 and 4 to 6, which further contains a diamine component other than 1,10-decanediamine in an amount of 20 to 0.05 mol% based on all diamine components including the 1,10-decanediamine.

8. The polyoxamide resin according to any one of claims 1 and 3 to 6, which further contains a diamine component other than a diamine having a carbon number of 11 to 18 in an amount of 20 to 0.05 mol% based on all diamine components including the diamine having a carbon number of 11 to 18.

9. The polyoxamide resin according to any one of claims 1 to 8, which is used for an impact-resistant part.

10. An impact-resistant part containing the polyoxamide resin according to claim 9.

11. l The impact-resistant part according to claim 10, which has any one shape selected from the group consisting of a sheet, a film, a pipe, a tube, a monofilament, a fiber and a container.

12. The impact-resistant part according to claim 10 or 11, which is any one selected from the group consisting of an automotive part, a computer, a computer-related device, an optical device part, an electric/electronic device, an information/communication device, a precision device, a civil engineering/building product, a medical product and a household product.

**Amended claims under Art. 19.1 PCT**

1. A polyoxamide resin comprising oxalic acid as a dicarboxylic acid component and a diamine having a carbon number of 10 to 18 as a diamine component, wherein
the relative viscosity ($\eta$r) as measured at 25°C by means of an Ostwald viscometer by using a solution having a polyoxamide resin concentration of 1.0 g/dl, with the solvent being 96% sulfuric acid, is 2.1 or more.

2. (Added) The polyoxamide resin according to claim 1, wherein the IZOD impact strength is 51 J/m or more.

3. (Amended) The polyoxamide resin according to claim 1, wherein the diamine component is 1,10-decanediamine having a carbon number of 10.

4. (Amended) The polyoxamide resin according to claim 1, wherein the diamine component is a diamine having a carbon number of 11 to 18.

**5.** (Amended) The polyoxamide resin according to any one of claims 1 to 4, wherein the relative viscosity ($\eta$r) as measured at 25°C by means of an Ostwald viscometer by using a solution having a polyoxamide resin concentration of 1.0 g/dl, with the solvent being 96% sulfuric acid, is from 2.1 to 6.0.

**6.** (Amended) The polyoxamide resin according to any one of claims 1 to 5, wherein said diamine component is a plant-derived diamine.

**7.** (Amended) The polyoxamide resin according to any one of claims 1 to 6, which further contains a dicarboxylic acid component other than oxalic acid in an amount of 20 to 0.05 mol% based on all carboxylic acid components including the oxalic acid.

**8.** (Amended) The polyoxamide resin according to any one of claims 1 to 3 and 5 to 7, which further contains a diamine component other than 1,10-decanediamine in an amount of 20 to 0.05 mol% based on all diamine components including the 1,10-decanediamine.

**9.** (Amended) The polyoxamide resin according to any one of claims 1, 2 and 4 to 7, which further contains a diamine component other than a diamine having a carbon number of 11 to 18 in an amount of 20 to 0.05 mol% based on all diamine components including the diamine having a carbon number of 11 to 18.

**10.** (Amended) The polyoxamide resin according to any one of claims 1 to 9, which is used for an impact-resistant part.

**11.** (Amended) An impact-resistant part containing the polyoxamide resin according to claim 10.

**12.** (Amended) The impact-resistant part according to claim 11, which has any one shape selected from the group consisting of a sheet, a film, a pipe, a tube, a monofilament, a fiber and a container.

**13.** (Amended) The impact-resistant part according to claim 11 or 12, which is any one selected from the group consisting of an automotive part, a computer, a computer-related device, an optical device part, an electric/electronic device, an information/communication device, a precision device, a civil engineering/building product, a medical product and a household product.

**EP 2 617 755 A1**

<table>
<tr><td colspan="2" align="center">INTERNATIONAL SEARCH REPORT</td><td>International application No.<br>PCT/JP2011/071745</td></tr>
</table>

A. CLASSIFICATION OF SUBJECT MATTER
*C08G69/26*(2006.01)i

According to International Patent Classification (IPC) or to both national classification and IPC

B. FIELDS SEARCHED

Minimum documentation searched (classification system followed by classification symbols)
C08G69/26

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 5-506466 A  (Exxon Chemical Patents Inc.),<br>22 September 1993 (22.09.1993),<br>claims; page 4, upper left column, line 20 to<br>upper right column, line 5; page 4, lower left<br>column, line 12 to lower right column, line 3;<br>page 4, lower right column, line 25 to page 5,<br>upper left column, line 2; page 5, lower right<br>column, line 17 to page 6, upper right column,<br>line 11<br>& US 5093466 A          & US 5223603 A<br>& EP 515553 A1          & WO 1991/013113 A1 | 1-12<br>11-12 |
| X<br>Y | JP 2009-235224 A  (Ube Industries, Ltd.),<br>15 October 2009 (15.10.2009),<br>claims; paragraphs [0009] to [0014], [0018],<br>[0019]; examples<br>(Family: none) | 1-12<br>11-12 |

[X] Further documents are listed in the continuation of Box C.          [ ] See patent family annex.

| | |
|---|---|
| *    Special categories of cited documents:<br>"A"  document defining the general state of the art which is not considered<br>      to be of particular relevance<br>"E"  earlier application or patent but published on or after the international<br>      filing date<br>"L"  document which may throw doubts on priority claim(s) or which is<br>      cited to establish the publication date of another citation or other<br>      special reason (as specified)<br>"O"  document referring to an oral disclosure, use, exhibition or other means<br>"P"  document published prior to the international filing date but later than<br>      the priority date claimed | "T"  later document published after the international filing date or priority<br>      date and not in conflict with the application but cited to understand<br>      the principle or theory underlying the invention<br>"X"  document of particular relevance; the claimed invention cannot be<br>      considered novel or cannot be considered to involve an inventive<br>      step when the document is taken alone<br>"Y"  document of particular relevance; the claimed invention cannot be<br>      considered to involve an inventive step when the document is<br>      combined with one or more other such documents, such combination<br>      being obvious to a person skilled in the art<br>"&"  document member of the same patent family |

| | |
|---|---|
| Date of the actual completion of the international search<br>    10 November, 2011 (10.11.11) | Date of mailing of the international search report<br>    13 December, 2011 (13.12.11) |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/071745

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2006-57033 A  (Ube Industries, Ltd.),<br>02 March 2006 (02.03.2006),<br>claims; paragraphs [0011] to [0017], [0021],<br>[0022]; examples<br>(Family: none) | 1,3-12<br>11-12 |
| X<br>Y | WO 2008/123531 A1  (Ube Industries, Ltd.),<br>16 October 2008 (16.10.2008),<br>claims; paragraph [0005]; examples<br>& US 2010/0113737 A1      & EP 2130852 A1<br>& WO 2008/123531 A1      & CN 101641393 A | 1-10<br>11-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010209859 A
- JP 2010209887 A
- JP 2011080065 A
- JP 2006057033 A
- JP 5506466 A
- WO 2008072754 A
- US 2130948 A
- US 2558031 A

**Non-patent literature cited in the description**

- **S.W. SHALABY.** *J. Polym. Sci.,* 1973, vol. 11, 1
- **L. FRANCO et al.** *Macromolecules,* 1998, vol. 31, 3912
- **R.J. GAYMANS et al.** *J. Polym. Sci. Polym. Chem. Ed.,* 1984, vol. 22, 1373